# EUROPEAN PATENT APPLICATION

(11) **EP 4 533 934 A1**
(43) Date of publication of application: **09.04.2025**
(21) Application number: 24202885.0
(22) Date of filing: 26.09.2024
(51) Int. Cl.: A01C 7/20, A01C 21/00

(54) **METHOD OF CONTROLLING A PLANTING MACHINE AND PLANTING DEPTH CONTROL SYSTEM**

(30) Priority: 04.10.2023 US 202318480986
(71) Applicant: Deere & Company, Moline, IL 61265 (US)
(72) Inventor: SEABERT, ADAM L, 68163 Mannheim (DE); HUBNER, CARY S, 68163 Mannheim (DE); KYVERYGA, PETER, 68163 Mannheim (DE); ARMSTRONG, KEVIN L, 68163 Mannheim (DE)
(74) Representative: Reichert, Christian

(57) **Abstract**

A method of controlling a planting machine (100) having a furrow opener (120) and a gauge wheel (122) is disclosed. The method comprising: receiving a set of georeferenced target planting depth values (204) corresponding to a field; detecting a location of the planting machine (100) in the field; automatically identifying a target planting depth value from the set of georeferenced target planting depth values (204), based on the detected location; and automatically generating a control signal to control a planting depth actuator (202) to adjust a relationship between the furrow opener (120) and the gauge wheel (122) to control planting depth of the planting machine (100) based on the identified target planting depth value. Further, a planting depth control system (200) is disclosed.

## Description

### FIELD OF THE DESCRIPTION

The present description relates to agricultural machines. More specifically, the present description relates to generating depth data and varying a planting depth on a planter row unit.

### BACKGROUND

There are a wide variety of different types of agricultural machines. Some agricultural machines include planters that have row units. For instance, a row unit is often mounted on a planter with a plurality of other row units. The planter is often towed by a tractor over soil where seed is planted in the soil, using the row units.

The row units on the planter follow the ground profile by using a combination of a downforce assembly that imparts a downforce on the row unit to push disc openers into the ground and gauge wheels to set depth of penetration of the disc openers. Other downforce assemblies provide a relatively fixed downforce. Some allow an operator to change the downforce applied to the row unit by adjusting a mechanical mechanism on the row unit, and others allow the operator to change the downforce from the operator compartment.

In many current systems, the gauge wheels are mounted to the row unit by one or more gauge wheel arms. Setting the seed depth on the planter is often done by stopping the planter, exiting the operator compartment and manually adjusting a gauge wheel arm stop to limit movement of the gauge wheel relative to the disc opener. The manual adjustment mechanism often uses a spindle drive, a handle, or another mechanical mechanism that can be used to adjust seed depth. This type of adjustment is somewhat cumbersome and time consuming. It also does not lend itself to frequent changes, because of its cumbersome and time consuming nature.

Therefore, many planting operations are performed with sub-optimal planting seed depth settings. This can result in a loss of yield potential. For instance, at the beginning of a corn planting operation, the operator may set the seed depth to two inches and then leave the planter at that depth until the corn planting operation is completed. The operator may leave the planter at this depth even though the depth may be sub-optimal for changing environmental or soil characteristics.

The discussion above is merely provided for general background information and is not intended to be used as an aid in determining the scope of the claimed subject matter.

### SUMMARY

An agricultural planter row unit has a gauge wheel supported by a gauge wheel arm, to control planting depth. An actuator drives movement of a mechanical stop that bears against a gauge wheel support arm to position the gauge wheel support arm to obtain a desired planting depth.

A seed depth control system receives seed depth values generated based on field topography and soil characteristics and automatically controls actuation of the seed depth actuator.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a top view of one example of a planting machine.
FIG. 2 shows a side view of one example of a row unit of the planting machine illustrated in FIG. 1.
FIG. 3 shows a side view of another example of a row unit of the planting machine illustrated in FIG. 1.
FIG. 4 is a block diagram of one example of a planting depth model training system.
FIG. 5 is a block diagram showing one example of a planting depth control system.
FIG. 6 is a flow diagram showing one example of the operation of a planting depth model training system.
FIG. 7 is a flow diagram showing one example of the operation of a planting depth generation model.
FIG. 8 is a flow diagram showing one example of the operation of a planting depth control system.
FIG. 9 is a block diagram showing one example of an agricultural system deployed in a remote server architecture.
FIGS. 10, 11 and 12 are diagrams showing examples of mobile devices that can be used in machines and systems in other FIGS.
FIG. 13 is a block diagram of one example of a computing environment that can be used in the architectures, systems, and machines shown in the previous figures.

### DETAILED DESCRIPTION

As discussed above, in some planting machines, the depth at which a seed is planted (e.g., the furrow depth) is controlled manually. That is, an operator of the towing vehicle (e.g., the tractor) must exit the towing vehicle and manually adjust the planting depth on each row unit using a manual adjustment mechanism. In other systems, the row units each have a controllable actuator that can be controlled (such as from the operator compartment of the towing vehicle) to control the planting depth corresponding to the row units. However, it can still be difficult for an operator to make adjustments to the planting depth, during a planting operation, in order to account for changes in field characteristics.

For instance, fields are not usually flat. Instead, the topography of a field changes so that some areas of the field are concave areas (meaning that those areas will collect water), and some areas are convex areas (meaning that water will run off of those areas). Thus, the moisture profile at different points in the field may be different, and the desired planting depth may vary based upon whether a portion of the field is likely to retain water or to shed water. The planting depth may also vary based upon a wide variety of other field characteristics or environment characteristics (such as soil type, soil texture, organic content), as well as for a wide variety of other reasons or based on other criteria that may change over a field.

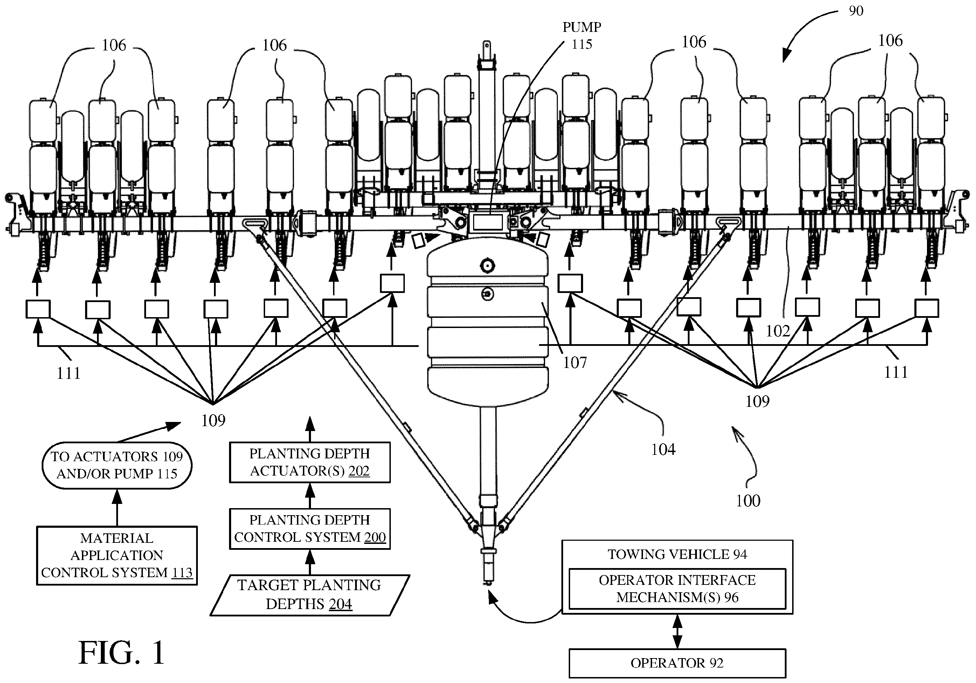

Therefore, in one example, the present description describes a system that accesses historical data and generates a set of target planting depths corresponding to a field. For instance, the present system can access historical yield data, and historical planting depth data, where the yield and planting depth data are georeferenced to a geographic location in a field from which the data were obtained. The data may also include topographic data indicative of the topology of the field, the soil characteristics (such as soil type, soil texture, soil moisture, organic content, etc.) as well as any other characteristics of the field, as well as environmental data, such as weather data, etc. The present system can then train a model that receives, as an input, the characteristics (e.g., topography) of a field to be planted and generates, as an output, a set of georeferenced target planting depths for the field. The model can thus be trained to identify a desired planting depth given the topography of the field and other characteristics that the model was trained on. Then, prior to planting a field, the model can be provided the characteristics corresponding to the field to be planted and generate a set of georeferenced target planting depths that can be used to control the depth of the furrow, and thus the planting depth, for the row unit as the row unit travels over the field. The row units can be controlled individually or in groups as the planting machine travels across the field performing the planting operation. FIG. 1 is a partial pictorial, partial schematic top view of one example of an architecture 90 that includes agricultural planting machine 100, towing vehicle 94, that may be operated by operator 92, material application control system 113, and planting depth control system 200. Control systems 113 and/or 200 can be located on one or more individual parts of machine 100 (such as on each row unit, or set of row units), centrally located on machine 100, distributed about the architecture 90, or on towing vehicle 94. Operator 92 can illustratively interact with operator interface mechanisms 96 to manipulate and control towing vehicle 94, material or seed control system 113, planting depth control system 200, and some or all portions of machine 100. Machine 100 is a row crop planting machine that illustratively includes a toolbar 102 that is part of a frame 104. FIG. 1 also shows that a plurality of planting row units 106 are mounted to the toolbar 102. Machine 100 can be towed behind towing vehicle 94, such as a tractor. FIG. 1 shows that material can be stored in a tank 107 and pumped through a supply line 111 so the material can be dispensed in or near the rows being planted. In one example, a set of devices (e.g., actuators) 109 is provided to perform this operation. For instance, actuators 109 can be individual pumps that service individual row units 106 and that pump material from tank 107 through supply line 111 so the material can be dispensed on the field. In such an example, material application control system 113 controls the pumps. In another example, actuators 109 are valves and one or more pumps 115 pump the material from tank 107 to valves 109 through supply line 111. In such an example, material application control system 113 controls valves 109 by generating valve or actuator control signals. The control signal for each valve or actuator can, in one example, be a pulse width modulated control signal. The flow rate through the corresponding valve 109 can be based on the duty cycle of the control signal (which controls the amount of time the valve is open and closed). The flow rate can be based on multiple duty cycles of multiple valves or based on other criteria. Further, the material can be applied in varying rates. For example, fertilizer may be applied at one rate when it is being applied at a location where it will be spaced from a seed location and at a second, higher, rate when it is being applied at a location closer to the seed location. The valves can be incorporated into or otherwise used with the nozzles. The nozzles may be controllable to aim or shape the spray of material being applied. The valves can also be controlled in a way other than using pulse width modulation. These are examples only.

In addition, each row unit 106 can have a commodity tank that stores material to be applied. A commodity delivery system can have a motor that drives a commodity meter that dispenses an amount of the material. The motor can be controlled by material application control system 113 to dispense the material at desired locations relative to seeds or in another desired way.

As described in greater detail below, each row unit 106 has a furrow opener that opens a furrow so that seed, and in some cases other material can be placed in the furrow. The depth of the furrow is controllable by having planting depth control system 200 generate control signals to control planting depth actuators 202. Planting depth control system 200 can obtain a set of georeferenced target planting depths 204 and control planting depth actuators 202 based on location of row units 106 and based on the georeferenced target planting depths.

Planting depth actuators 202 can, for instance, be similar to those described in US Patent No. 10,827,663 or different actuators. Planting depth actuators 202 can be independently controllable actuators located on each row unit 106, or actuators 202 can be controllable in groups. Actuators 202 can take different forms and be controlled in other ways as well.

Row units 106 can also have furrow sensors or other sensors that can sense the depth of the furrow. The depth can be fed back to planting depth control system 200 for comparison to the target planting depths 204 to perform closed loop control of planting depth actuators 202. The target planting depths 204 can be calculated during runtime based on characteristics of the field being planted, or the target planting depths 204 can be pre-calculated and provided as a depth map showing target planting depths at different locations in the field. Planting depth control system 200 can generate control signals based on the position of machine 100 (and derived or sensed position of row units 106) and the georeferenced target planting depths. These are only examples of how planting depth can be controlled. Others are described elsewhere herein.

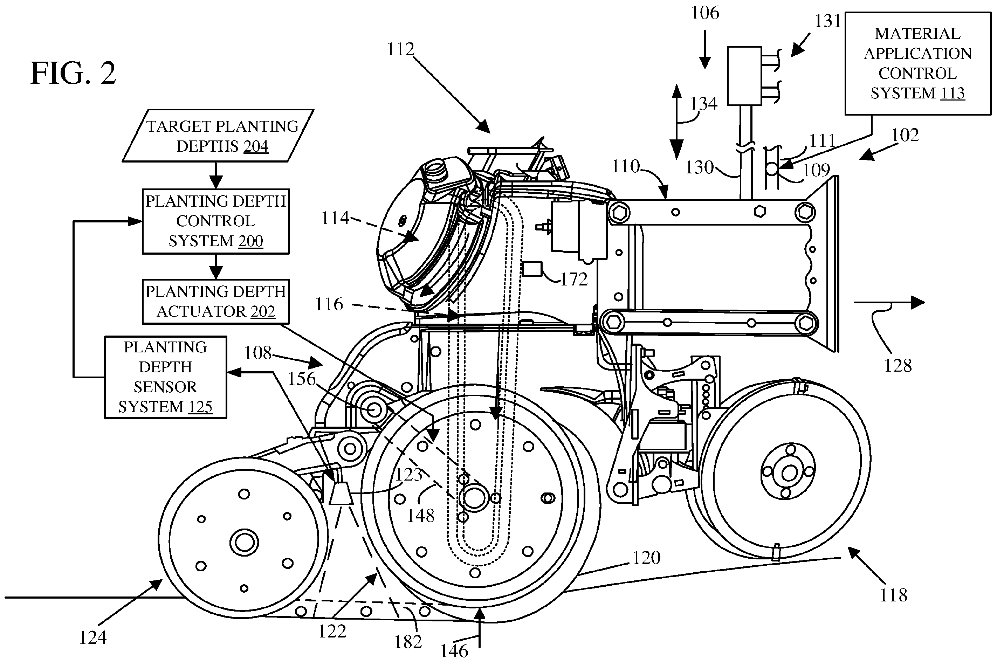

FIG. 2 is a side view showing one example of a row unit 106 in more detail. FIG. 2 shows that each row unit 106 illustratively has a frame 108. Frame 108 is illustratively connected to toolbar 102 by a parallel linkage shown generally at 110. Linkage 110 is illustratively mounted to toolbar 102 so that linkage 110 can move upwardly and downwardly (relative to toolbar 102). Row unit 106 also illustratively has a seed hopper 112 that stores seed. The seed is provided from hopper 112 to a seed metering system 114 that meters the seed and provides the metered seed to a seed delivery system 116 that delivers the seed from the seed metering system 114 to the furrow or trench 182 generated by furrow opener 120 on the row unit 106. In one example, seed metering system 114 uses a rotatable member, such as a disc or concave-shaped rotating member, and an air pressure differential to retain seed on the disc and move the seed from a seed pool of seeds (provided from hopper 112) to the seed delivery system 116. Other types of meters can be used as well.

Row unit 106 can also include a row cleaner 118, ahead of furrow opener 120, a set of gauge wheels 122, and a set of closing wheels 124. Row unit 106 can also include an additional hopper that can be used to provide additional material, such as a fertilizer or another chemical or commodity.

FIG. 2 also shows that row unit 106 has a furrow sensor 123 which may be, for example, an image capture device (e.g., camera). A planting depth sensing system 125 controls the actuation of device 123 to capture an image (or another sensed element) that contains information of interest. System 125 can synchronize the control of image capture device 123 so images are captured or another characteristic indicative of planting depth is sensed at the desired time to obtain useful information.

In the example shown in FIG. 2, liquid material is passed, e.g., pumped or otherwise forced, through supply line 111 to an inlet end of actuator 109. Actuator 109 is controlled by control system 113 to allow the liquid to pass from the inlet end of actuator 109 to an outlet end.

As liquid passes through actuator 109, the liquid travels through an application assembly 117 from a proximal end (which is attached to an outlet end of actuator 109) to a distal tip (or application tip) 119, where the liquid is discharged into a trench 182, or proximate a trench or furrow 182. Seeds are also delivered to furrow 182 by meter 114 and delivery system 116. The timing of operation of planting depth sensing system 125 may be controlled based on when material will be applied in the furrow, when seed is planted, etc. Device 123 can then be controlled to capture useful information about the material application operation, the depth of the furrow, the planting operation, seed depth within the furrow, residue, furrow formation, etc. In operation, as row unit 106 moves in the direction generally indicated by arrow 128, opener 120 opens furrow 182 at a depth set by gauge wheel 122. Material application control system 113 generates a control signal to actuate valve 109 to apply material (such as fertilizer) to the furrow at desired locations, or intervals in furrow 182. Row cleaner 118 generally cleans the row ahead of the opener 120 to remove plant debris from the previous growing season prior to the opener 120 opening furrow 182 in the soil. Seed is metered by seed metering system 114 and delivered to the furrow by seed delivery system 116. Seeds can be sensed by seed sensor 172, as the seeds move through seed delivery system 116. In another example, row unit 106 may be provided with a seed firmer that is positioned to travel through the furrow 182 after seeds are placed in furrow 182 and before the furrow 182 is closed to firm the seeds in place. A seed sensor can be placed on the seed firmer and generate a sensor signal indicative of a seed. The position of each seed (and/or when the seed is placed in the furrow) can be controlled based on the seed sensor signal from the seed sensor and/or based on the position of fertilizer, or the timing of application of fertilizer, as is described elsewhere herein. Closing wheels 124 close the furrow 182 over the seed. A downforce/upforce generator 131 can also be provided to controllably exert downforce or upforce in the direction indicated by arrow 134 to keep the row unit 106 in desired engagement with the soil.

Actuator 131 can be a hydraulic actuator, a pneumatic actuator, a spring-based mechanical actuator or a wide variety of other actuators. In the example shown in FIG. 2, a rod 130 is coupled to a parallel linkage 110 and is used to exert an additional downforce or upforce (in the direction indicated by arrow 134) on row unit 106. The total downforce (which includes the force indicated by arrow 134 exerted by actuator 131, plus the force due to gravity acting on row unit 106) is offset by upwardly directed forces acting on closing wheels 124 (from the ground) and double disc opener 120 (again from the ground) as well as on row cleaner 118. The remaining force and the force on any other ground engaging component on the row unit (not shown), is the differential force indicated by arrow 146. The differential force may also be referred to herein as the downforce margin. The differential force acts on the gauge wheels 122. This load can be sensed by a gauge wheel load sensor which may be located anywhere on row unit 106 where the sensor can sense that load. The gauge wheel load sensor can also be placed where the sensor may not sense the load directly, but a characteristic indicative of that load. Both sensing the load directly or indirectly are contemplated herein and will be referred to as sensing a force characteristic indicative of that load (or force). For example, the gauge wheel load sensor can be disposed near a set of gauge wheel control arms (or gauge wheel arms) 148 that movably mount gauge wheels 122 to shank or frame 108 and control an offset between gauge wheels 122 and the discs in double disc opener 120, to control planting depth. In one example, gauge wheel arms 148 illustratively pivot around pivot point 156 so that, as planting depth actuator 202 actuates the relative position of gauge wheels 122, relative to the double disc opener 120, changes, to change the depth at which seeds are planted.

Again, in operation, as row unit 106 travels generally in the direction indicated by arrow 128 and as the double disc opener 120 opens a furrow 182 in the soil the depth of the furrow 182 is set by planting depth actuator 202, which, itself, controls the offset between the lowest parts of gauge wheels 122 and disc opener 120. Seeds are dropped, into the furrow 182 and closing wheels 124 close the soil. Furrow sensor 123 can sense, among other things, the furrow depth before the furrow 182 is closed.

In some prior systems, in order to change the planting depth, the operator of the towing vehicle 94 would dismount the towing vehicle 94 and operate a mechanical actuator that would adjust the position of a mechanical stop. This would be done on each row unit 106.

By contrast, in accordance with one example, planting depth actuator 202 can be automatically actuated by planting depth control system 200 based on a target planting depth 204. In the example shown in FIG. 2, planting depth control system 200 receives the set of georeferenced target planting depths 204. The target planting depths 204 may be generated from a planting depth generation model, or another planting depth generation system (examples of which are described elsewhere herein). The target planting depths 204 may be georeferenced so that the target planting depths 204 correspond to different locations in the field. Therefore, the planting depth control system 200 may include a position sensor (or receive a sensor signal from a position sensor) that senses a position of row unit 106 in the field. The target planting depth corresponding to that location can then be accessed and used by planting depth control system 200, along with the current planting depth sensed by sensor 123 and planting depth sensing system 125, to generate a control signal to control planting depth actuator 202. The control signal can control planting depth actuator 202 to increase the planting depth or decrease the planting depth or maintain the planting depth, based upon a comparison of the target planting depth with the actual planting depth. Also, in one example, it may be undesirable to change the depth of furrow 182 too quickly. In that case, the adjustment to the planting depth can be made, in increments over time, in order to maintain a desired furrow contour (e.g., furrow depth relative to furrow length).

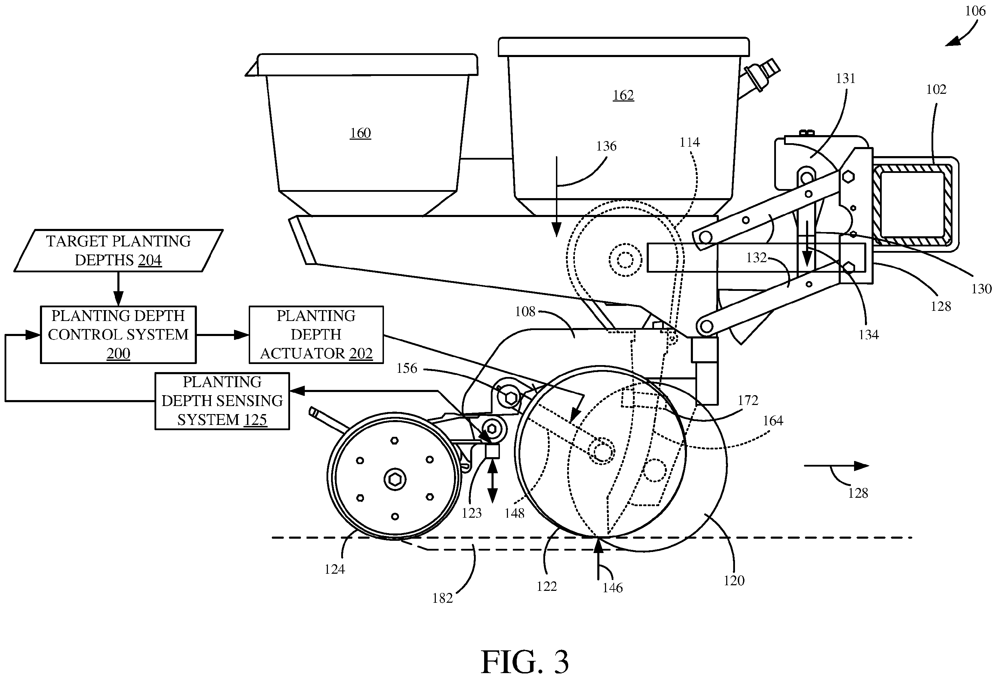

FIG. 3 is a side view of another example of a row unit 106, with planting depth actuator 202, and planting depth control system 200 shown as well. Items in FIG. 3 that are similar to those in FIG. 2 are similarly numbered. In FIG. 3, row unit 106 illustratively includes a chemical tank (also referred to herein as a commodity tank) 160, and a seed storage tank 162. The seed delivery system in the example shown in FIG. 3 is a seed tube 164. Seeds from tank 162 are fed into a seed meter 114 (e.g., by gravity or from a centralized commodity distribution system that uses pneumatic commodity distribution to each row unit 106). The seed meter 114 controls the rate at which seeds are dropped from seed storage tank 162 into a seed delivery system 116 which, in the example in FIG. 2, is seed tube 164, but could be another seed delivery system, such as a brush belt or flighted belt. In one example, the seeds can be sensed as they move through seed tube 164 by a seed sensor 172.

Some parts of the different examples of row units 106 shown in FIGS. 2 and 3 will now be discussed in more detail. First, it will be noted that there are different types of seed meters 114, and the one that is shown is shown for the sake of example only. Also, in one example, each row unit 106 need not have its own seed meter. Instead, metering or other singulation or seed dividing techniques can be performed at a central location, for groups of row units 106. The metering systems can include finger pick-up discs and/or vacuum meters (e.g., having rotatable discs, rotatable concave or bowl-shaped devices), among others. The seed delivery system 116 can be a gravity drop system (such as the seed tube 164 shown in FIG. 3) in which seeds are dropped through the seed tube 164 and fall (via gravitational force) through the seed tube and out the outlet end 171 into the seed trench 182. Other types of seed delivery systems 116 may be or may include assistive systems such as that shown in FIG. 2, in that the assistive systems do not simply rely on gravity to move the seed from the metering system into the ground. Instead, such assistive systems actively assist the seeds in moving from the meter to a lower opening, where the seeds exit or are deposited into the ground or trench 182. These assistive systems can be systems that physically capture the seed and move the seed from the meter 114 to the outlet end of the seed delivery system 116 or the assistive systems can be pneumatic systems that pump air through the seed tube 164 to assist movement of the seed, or other systems. In a pneumatic system, the air velocity can be controlled to control the speed at which the seed moves through the delivery system 116.

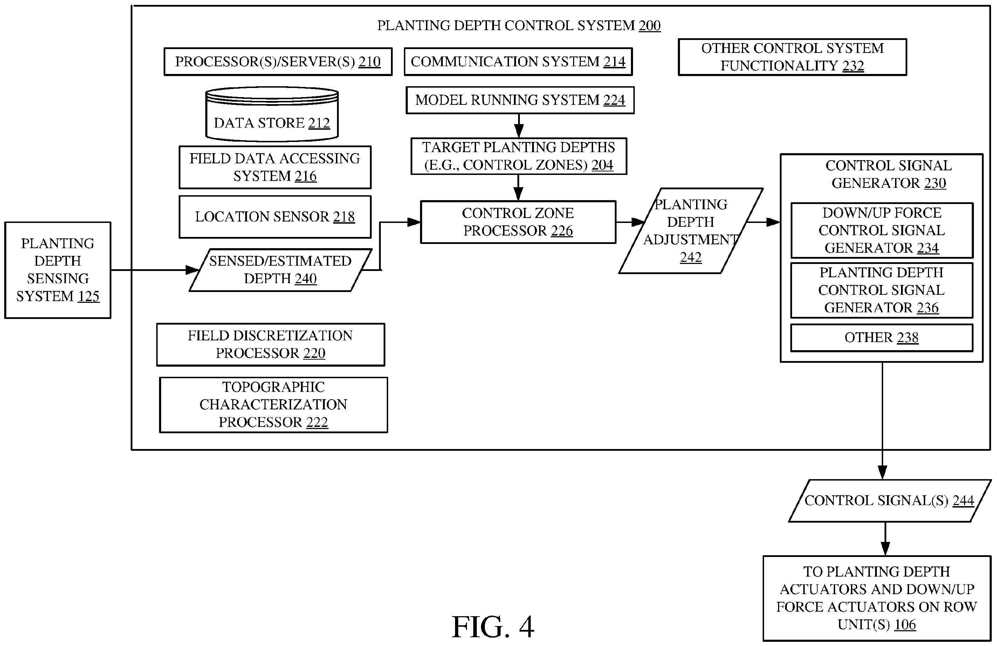

FIG. 4 is a block diagram showing one example of planting depth control system 200, in more detail. In the example shown in FIG. 4, planting depth control system 200 includes one or more processors or servers 210, data store 212, communication system 214, field data accessing system 216, location sensor 218, field discretization processor 220, topographic characterization processor 222, model running system 224, control zone processor 226, planting depth sensing system 228, control signal generator 230, and other control system functionality 232. Control signal generator 230 can include down/upforce control signal generator 234, planting depth control signal generator 236, and other items 238. Before describing the operation of planting depth control system 200 in more detail, a description of some of the items in planting depth control system 200, and their operation, will first be provided.

It will first be noted that different parts of planting depth control system 200 can be located at different locations. For instance, model running system 224 can be located at a remote server environment (e.g., in the cloud) and can be run to generate a set of target planting depths for a field so that only the target planting depths are downloaded to the control zone processor 226 that is on the row unit 106 or on the towing vehicle 94 or distributed between those two items. Communication system 214 allows items in planting depth control system 200 to communicate with one another and to communicate with other systems on the towing vehicle 94, on other row units 106, in a remote server environment, in other vehicles, etc. Therefore, communication system 214 can be a Bluetooth communication system, a Wi-Fi communication system, a near field communication system, a wide area network communication system, a local area network communication system, a cellular network communication system, or any of a wide variety of other communication systems or combinations of systems. Location sensor 218 can be a global navigation satellite system (GNSS) receiver, a dead reckoning system, a cellular triangulation system, or another location sensor 218 that identifies a location of sensor 218 in a global or local coordinate system.

Field data accessing system 216 obtains data corresponding to the field to be planted. The data can include, for instance, topographical data, soil data (such as soil texture, soil type, organic content, etc.), weather data which may be indicative of the weather conditions immediately prior to the planting operation (e.g., ten days prior) and the weather forecast immediately after the planting operation (e.g., the weather forecast for the next ten days after the planting operation). The field data can then be provided to model running system 224. Model running system 224 can access a depth generation model which is trained to receive field data, as an input, and generate georeferenced target planting depth data (e.g., target planting depths 204) as an output. For instance, the target planting depth data may vary across the field based upon the topography of the field, based on the soil, and/or based on environmental characteristics in the field. The target planting depths 204 are illustratively georeferenced to the field to be planted. Therefore, during planting, location sensor 218 senses a location of the row unit 106 in a global or local coordinate system and control zone processor 226 identifies the target planting depth for the sensed location from the georeferenced target planting depths 204. Based upon the target planting depth 204 for the current location (or an upcoming location), and based upon the sensed or estimated planting depth 240 (which may be received from planting depth sensing system 125) control zone processor 226 determines whether an adjustment needs to be made in the planting depth.

For instance, if the target planting depth 204 is the same as the sensed planting depth 240, then no adjustment needs to be made. However, if the target planting depth 204 for the current location or an upcoming location differs from the sensed or estimated planting depth 240, then control zone processor 226 determines that a planting depth adjustment 242 needs to be made. The panting depth adjustment 242 is output to control signal generator 230 where planting depth control signal generator 236 generates a planting depth control signal 244 that can be applied to planting depth actuators 202 to change the planting depth based upon the planting depth adjustment 242.

It will be noted that, in some instances, the planting depth adjustment 242 will be acting against the downforce or upforce applied by the downforce/upforce generators on the row units. In that case, down/upforce control signal generator 234 can remove the downforce or upforce so that the planting depth actuator 202 need not act against the applied downforce or upforce. Once the planting depth is changed or adjusted, then down/upforce control signal generator 234 can again apply the desired downforce or upforce. It will be noted that the planting depth and downforce/upforce can be controlled in conjunction with one another, simultaneously, or individually, along with such things as closing wheel camber, row cleaner pressure, and/or operational speed/ride quality.

Also, in one example, the field data can be further processed before it is provided to the depth generation model in model running system 224. For instance, field discretization processor 220 can break the field into discrete locations or cells which may have a particular geographic measurement (such as 10 meters by 10 meters). Topographic characterization processor 222 can then characterize the field based upon the topographic information corresponding to each discrete cell. For instance, where the topographic information is analyzed to determine that a cell is sloped in one direction or another or is level, a value can be assigned to the cell to indicate its topographic shape or characteristic. Then, processor 222 can analyze adjacent cells to identify areas or zones in the field that are generally convex or concave or level in shape. If the topographic information indicates that a zone is generally convex in shape, then the zone may be labeled as convex. If the topographic information indicates that a zone is generally concave, then that zone can be labeled as concave. The cells and zones can be labeled in other ways as well, such as sloped, the direction of slope, flat, or to reflect other topographic conditions. Then, instead of feeding the raw topographic data into the depth generation model, the topographic characterizations, georeferenced to each cell and/or zone, can be fed into the model along with any other desired data. Thus, the depth generation model can consider that a cell or zone is concave and the frequency, timing, and/or amount of rainfall (or other characteristics indicative of or responsive to rainfall) over a desired period (e.g., the last ten days and the next ten days after planting). This information can be used by the model to generate a target planting depth for that cell or zone. This is just one example and any of a wide variety of other criteria can be considered by the model as well.

Once the target planting depths are generated by the model, the target planting depth values may be aggregated together to identify depth control zones. For instance, if a majority of target planting depths for a set of adjacent cells or zones have a value of two inches (e.g., for a 40 meter by 40 meter square area), then that area may be aggregated into a single depth control zone with a target planting depth of two inches. If a majority of cells in a next adjacent area (which is, for example 100 meters by 100 meters) all show a target planting depth value of 1.5 inches, then that 100 meter by 100 meter area can be aggregated into a depth control zone having a target planting depth of 1.5 inches. In this way, during the planting operation, the planting depth actuators 202 need not react as quickly to small changes in the target planting depths from one location to the next, as they would if the planting depths were not aggregated into planting depth control zones. The sizes of the planting depth control zones may vary, or be fixed, or vary within one or more limits, etc.

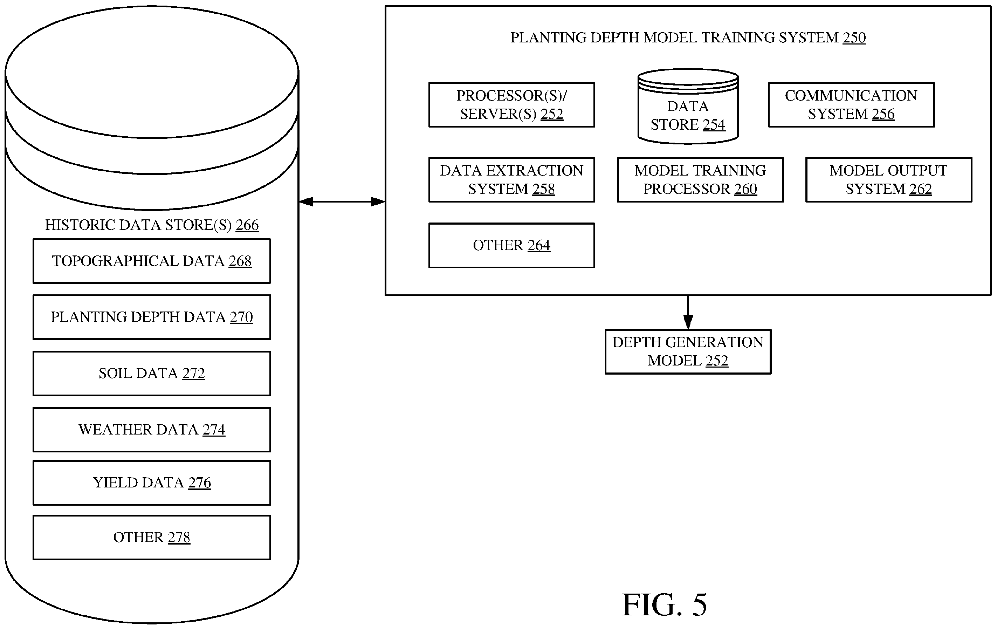

FIG. 5 is a block diagram of one example of a planting depth model training system 250 that can be used to train a depth generation model 252 that can be run by model running system 224. Planting depth model training system 250 can include one or more processors 252, data store 254, communication system 256, data extraction system 258, model training processor 260, model output system 262, and any of a wide variety of other items 264. In the example shown in FIG. 5, data extraction system 258 can extract historical data from one or more historical data stores 266.

Historical data stores 266 can be located in remote server environments, in local storage systems, on other machines, or in a wide variety of other locations. Historical data store 266 can store georeferenced topographical data 268 which identifies the topography of the fields from which the historical data is obtained. The data can include historical planting depth data 270 which identifies the planting depth at different geographic locations in one or more different fields. The data can include soil data 272 which includes georeferenced soil data, such as the soil type, soil texture, soil moisture, organic content, etc. of soil at different locations. The data can include weather data 274 which indicates the weather conditions under which the historical data was obtained, and historical yield data 276 which identifies georeferenced yield values indicative of the yield at different geographic locations. The yield data 276 can illustratively be correlated to the same geographic locations from which the soil data 272 and planting depth data 270 were obtained, as well as to the locations corresponding to the weather data 274. The data can include other data 278 as well.

Data extraction system 258 thus extracts the data from historic data store(s) 266 and provides that data to model training processor 262. Model training processor 262 can run any of a wide variety of different types of model training algorithms to train depth generation model 262 based upon the historic data. The model training algorithms can thus include algorithms that are used to train generative artificial intelligence (AI) models (such as artificial neural network classifiers or other large language model components) that receive, as an input, field data, topographic data, weather data, and/or any other desired data corresponding to a field to be planted, and generate an output indicative of georeferenced target planting depths for different geographic locations in the field. Model training processor 260 can run machine learning algorithms and continue to update depth generation model 252 or train addition models or train model 252 in other ways.

Once the model 252 is trained, model output system 262 can output the depth generation model 252 so that it can be run by model running system 224. For instance, depth generation model 252 can be run in a cloud-based environment that is accessible by model running system 224. The depth generation model 252 can, itself, be downloaded to each planting depth control system 200 where it can be run locally or to one machine where it is run, with the target planting depths then communicated to other machines or row units. In another example, model running system 224 accesses the model in a remote server environment and simply obtains the target planting depth values 204 from the remote server environment for use in controlling the planting depth on the row units 106. These and other architectures are all contemplated herein.

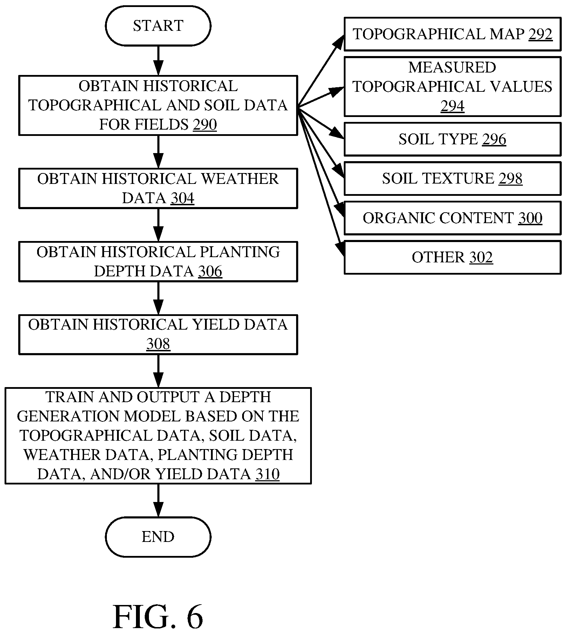

FIG. 6 is a flow diagram illustrating one example of the operation of planting depth model training system 250 in training a depth generation model 252. FIGS. 5 and 6 will now be described in conjunction with one another.

In one example, data extraction system 258 first extracts or accesses topographical and soil data for one or more different fields that have been harvested in the past, as indicated by block 290 in the flow diagram of FIG. 6. The topographical data can be obtained in the form of a topographical map 292 or other georeferenced measured topographic values 294. The historical data can also include other georeferenced data such as soil type 296, soil texture 298, organic content 300, and other topographical and soil data 302. Data extraction system 258 can extract historical weather data 274, as indicated by block 304 in the flow diagram of FIG. 6. The historical weather data illustratively corresponds to the same locations as the topographical data and soil data so that the weather conditions at various times for those locations can be known as well.

Data extraction system 258 can also obtain historical planting depth data 270, where it is available, and historical yield data 276. In one example, there may be no historical depth data available in which case a nominal planting depth is used. In another example, planting depth sample data or trial data can be used. In another example, additional historical depth data can be used and actual depth data can be recorded each year so the depth data can be used in the future to improve the model continually over time. Obtaining historical planting depth data is indicated by block 306 in the flow diagram of FIG. 6 and obtaining historical yield data is indicated by block 308 in the flow diagram of FIG. 6. Again, the historical planting depth data 270 is illustratively georeferenced, as is the historical yield data 276.

In one example, data extraction system 258 can use communication system 256 to extract the data. Communication system 256 may be a communication system that allows communication of the various items in planting depth model training system 250 with one another, and that also allows communication with remote systems. Therefore, communication system 256 may facilitate communication over a wide area network, a local area network, a near field communication network, a wifi or Bluetooth network, a cellular network, or any of a wide variety of other networks or combinations of networks.

The data can also be extracted from one or more different data stores. The data stores may be data stores that are maintained by vendors, manufacturers, farm managers, or other organizations. The historical data may be extracted by invoking interfaces that are exposed by the various sources of historical data, or in other ways.

Once the data is obtained, model training processor 260 trains depth generation model 252 based upon the obtained data. Model output system 262 outputs the depth generation model 252 so that model 252 can be accessed by one or more model running systems 224 in order to obtain target planting depth values 204 that can be used to control planting depth within a field or within another agricultural site. Training and outputting a depth generation model 252 is indicated by block 310 in the flow diagram of FIG. 6.

In one example, the depth generation model 252 is trained to receive inputs indicative of the topography of a field to be planted and to generate outputs indicative of target planting depth values 204 so that the planting machine can be controlled to plant seeds at the depths indicated by the target depth planting values. In another example, the depth generation model 252 can also take inputs indicative of the soil data corresponding to the field to be planted and the weather data corresponding to the field to be planted. Depth generation model 252 can generate the target planting depth values 204 based upon those inputs as well.

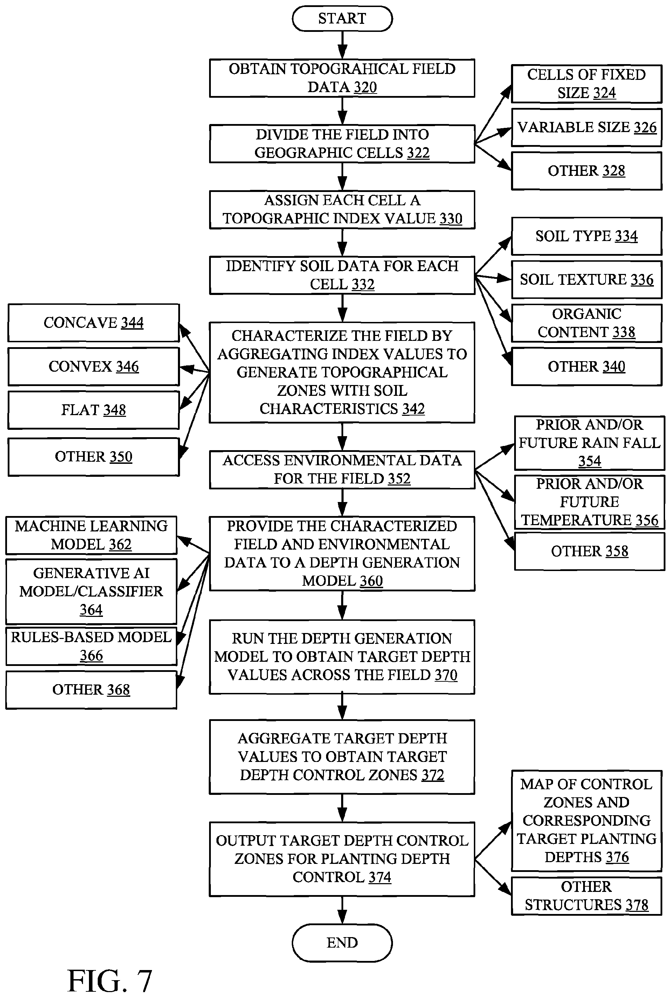

FIG. 7 is a flow diagram illustrating one example of the operation of planting depth control system 200 in running depth generation model 252 to obtain target planting depth values 204 aggregated into control zones for controlling planting depth. Field data accessing system 216 first obtains topographical field data identifying the topography of the field to be planted. Obtaining the topographical field data is indicated by block 320 in the flow diagram of FIG. 7. Once the field topographical data is obtained, field discretization processor 220 divides the field into discrete geographic locations or cells, as indicated by block 322. The cells can all be of a fixed size, as indicated by block 324, or the cells can be a variable size as indicated by block 326. The field can be divided or discretized in other ways as well, as indicated by block 328.

In one example, topographic characterization processor 222 then assigns each cell a topographic index value based upon the topographic information corresponding to the field. The topographic index value is indicative of a characteristic of topography in the cell, such as the level or degree to which the cell is concave or convex, etc. The topographic index value can be a Topography Position Index (TPI), for example, or another value. Assigning each of the cells a topographic index value is indicated by block 330 in the flow diagram of FIG. 7. By way of example, the topographic index value may be a number between +3 and -3 where an index value of +3 indicates that the topography in the cell is sloping upward (in a predefined direction) while an index value of -3 indicates that the topography is sloping downward in the given direction. A value of 0 may indicate that the topography is level or non-sloping.

Field data accessing system 216 then accesses or identifies soil data corresponding to each of the geographic cells, as indicated by block 332 in the flow diagram of FIG. 7. For instance, the soil data corresponding to each cell may identify soil type 334, soil texture 336, organic content 338, or any of a wide variety of other soil characteristics 340.

Topographic characterization processor 222 then characterizes the field by aggregating the topographic index values into groups, in order to generate topographical zones with the identified soil characteristics. Characterizing the field by aggregating the index values into zones is indicated by block 342 in the flow diagram of FIG. 7. For instance, the topographic index values, when grouped or aggregated, may indicate that a particular area of a field is concave in shape, as indicated by block 344. The index values, when grouped or aggregated, may indicate that the area is convex in shape as indicated by block 346, or relatively flat in shape, as indicated by block 348, or sloping in one direction or another or shaped in another way as indicated by block 350.

Field data accessing system 216 then accesses environmental data for the field, as indicated by block 252. The environmental data for the field may indicate prior and/or future rainfall, as indicated by block 254, prior and/or future temperature conditions, as indicated by block 356, and/or other environmental data such as relative humidity, wind speed, evapotranspiration rates, etc., as indicated by block 358. Thus, at this point in the processing, the field to be planted has been divided into georeferenced concave zones, convex zones, flat zones, and slopping or other zones. Each of the zones has a set of corresponding soil data indicating such things as the soil type, soil texture, organic content, etc. in each zone. Also, the amount, timing and frequency of prior or future rainfall as well as temperature information and/or other environmental data is known so that estimations can be made as to the moisture of the soil contained in each of the zones. The characterized field and the environmental data is then provided to model running system 224 which applies that information to depth generation model 252, as indicated by block 360 in the flow diagram of FIG. 7. As discussed elsewhere, the depth generation model 252 can be a machine learning model 362, a generative artificial intelligence model or classifier 364, a rules-based model 366, or another model 368. Also, it will be noted that some environmental data, such as weather data, may not change from cell-to-cell but may apply to multiple cells. Model running system 224 then runs the depth generation model 254 to obtain target depth values 204 across the field, as indicated by block 370 in the flow diagram of FIG. 7. The target depth values across the field may be aggregated into different zones. For instance, similar target depth values that are clustered together may be defined by model running system 224 (or model 254, itself) as a zone having a single target depth value. Thus, the control zone processor 226 can control the planting depth based upon the target depth value assigned to each of the zones. Aggregating the target depth values to obtain target depth control zones is indicated by block 372.

Model running system 224 then outputs the target planting depth control zones 204 so that they can be used by control zone processor 226 to control planting depth. Outputting the target depth control zones 204 is indicated by block 374 in the flow diagram of FIG. 7. The target planting depth control zones 204 can be output in a variety of different ways. For instance, the output may be a map of control zones labeled with corresponding target planting depths, as indicated by block 376. The target planting depth control zones 204 can be output using other structures as well, as indicated by block 378.

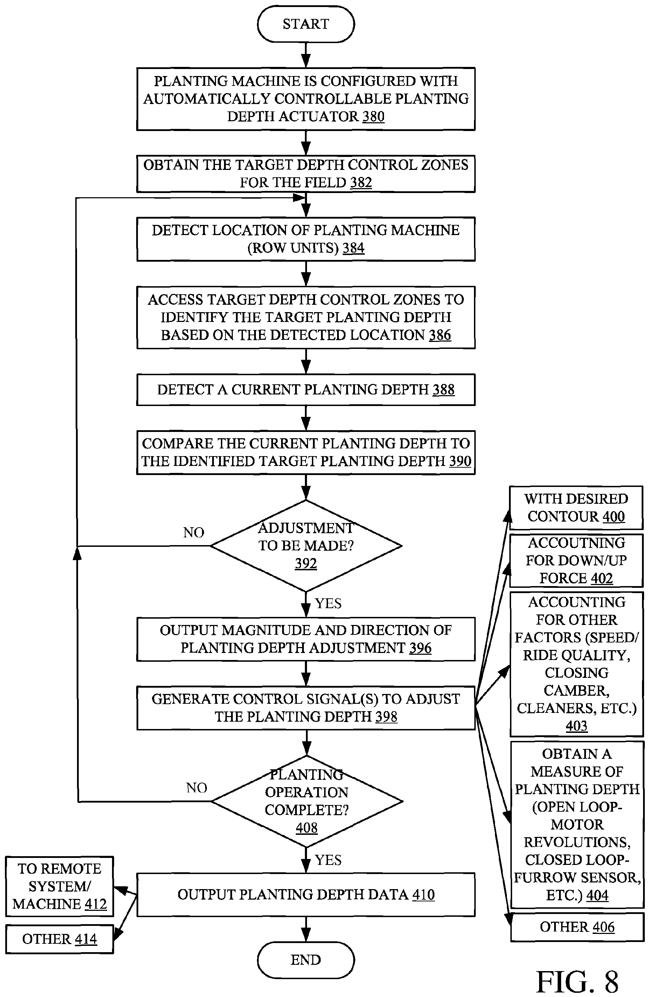

FIG. 8 is a flow diagram illustrating one example of the operation of control zone processor 226 in controlling the planting depth. It is first assumed that a planting machine is configured with automatically controllable planting depth actuators 202, as indicated by block 380 in the flow diagram of FIG. 8. Control zone processor 226 then obtains the target depth control zones 204 for the field to be planted, as indicated by block 382 in the flow diagram of FIG. 8. Again, the target planting depth control zones 204 can be computed at a remote system for the field to be planted and then downloaded to control zone processor 226 on a row unit 106 or on a towing vehicle, etc. In addition, the target planting depth control zones 204 can be generated by running the model on the row unit 106 or towing vehicle, etc., locally.

Once the target planting depth control zones 204 are obtained for the current field, control zone processor 226 detects a location of the machine (or row units) with location sensor 218, as indicated by block 384. Control zone processor 226 then accesses the target planting depth control zones 204 based upon the detected location in order to identify the target planting depth. For instance, the target planting depth control zones 204 are illustratively georeferenced within the field. Thus, by knowing the location of the row unit 106 within the field, control zone processor 226 can identify which planting depth control zone the row unit 106 is currently in (or is about to be in). The control zone processor 226 can then obtain the target planting depth for that identified control zone and use that target planting depth to control planting depth. Accessing the target depth control zone to identify the target planting depth based upon the detected location of the row unit 106 is indicated by block 386 in the flow diagram of FIG. 8. Control zone processor 226 can then detect a sensed or estimated planting depth 240 indicative of the current planting depth, as indicated by block 388. For instance, control zone processor 226 can estimate the current planting depth based upon the position of the planting depth actuator 202. In another example, planting depth sensing system 125 generates a sensed planting depth signal indicative of the sensed or detected depth of the furrow 182 being generated by the row unit 106. Other ways of sensing or estimating current planting depth are also contemplated herein.

Control zone processor 226 then compares the current planting depth to the identified target planting depth to determine whether a planting depth adjustment is to be made. Comparing the current and target planting depth is indicated by block 390 in the flow diagram of FIG. 8 and determining whether a planting depth adjustment is to be made, based upon that comparison, is indicated by block 392. In one example, as long as the current planting depth is within a threshold value of the target planting depth, then no adjustment needs to be made. The threshold value may be automatically or dynamically set, a fixed default threshold value, an empirically determined threshold value, or identified in other ways.

If no planting depth adjustment is to be made, processing reverts to block 384 where the planting machine location is detected. However, if, at block 392, it is determined that the planting depth adjustment is to be made, then an indication of the magnitude and direction of the planting depth adjustment is output as planting depth adjustment 242 (shown in FIG. 4) to control signal generator 230 as indicated by block 396 in the flow diagram of FIG. 8. Based upon the magnitude and direction of planting depth adjustment 242, control signal generator 230 generates control signals to adjust the planting depth, as indicated by block 398. In one example, planting depth control signal generator 236 takes into account the rate of change in depth of the furrow 182 so that any desired furrow contour can be maintained. For instance, it may be desirable to only change the depth of the furrow 182 by some maximum amount per lineal distance of travel in the furrow 182. In that case, the speed at which the row unit 106 is moving and the speed at which the planting depth adjustment is made can be controlled to maintain the desired furrow contour, as indicated by block 400 in the flow diagram of FIG. 8. Also, when the downforce or upforce is being applied in a direction that is opposed to the planting depth adjustment, then down/up force control signal generator 234 can generate control signals to remove the downforce or upforce so that that the planting depth adjustment can be made without having to overcome the applied downforce or upforce. The downforce or upforce can then be reapplied once the planting depth adjustment is made. Performing the planting depth adjustment accounting for the downforce or upforce in this way is indicated by block 402 in the flow diagram of FIG. 8, as well as other factors such as speed/ride quality, closing camber, row cleaners, etc., as indicated by block 403 in FIG. 8.

As the planting depth adjustment is being made, control zone processor 226 can again obtain an input that indicates an estimate or a measure of current planting depth to determine when the adjustment has been successfully made, as indicated by block 404 in the flow diagram of FIG. 8. For instance, the estimate or measure of current planting depth may be an open loop estimate which is derived from the number of motor revolutions of the planting depth actuator 202, or the lineal position the planting depth actuator (where, for instance, the planting depth actuator 202 is a hydraulic cylinder). The measure can be a closed loop measure where a sensor senses the furrow depth and provides the sensed furrow depth back to processor 226. The measure of planting depth can be obtained in other ways as well. Control signal generator 230 can also generate other control signals to perform the planting depth adjustment in other ways, as indicated by block 406 in the flow diagram of FIG. 8.

Until the planting operation is complete, as indicated by block 408 in the flow diagram of FIG. 8, processing again reverts to block 384 where the location of the row unit 106 in the field is detected, in order to continue controlling the planting depth. However, if, at block 408, it is determined that the planting operation is complete, then the planting depth data for the current field can be output for storage and later use or processing. Outputting the planting depth data is indicated by block 410 in the flow diagram of FIG. 8. The planting depth data can be output to a remote system or another machine as indicated by block 412, or in other ways as indicated by block 414.

It can thus be seen that the present description describes a system that characterizes the topography of a field and may also consider weather data, soil data, and other data, and generates a set of target planting depths for the field. The target planting depths can be aggregated into control zones which are used to control planting depth actuators on a row unit 106. The planting depth actuators are controlled to vary the planting depth across a field, as desired, based upon the field topology and other field data.

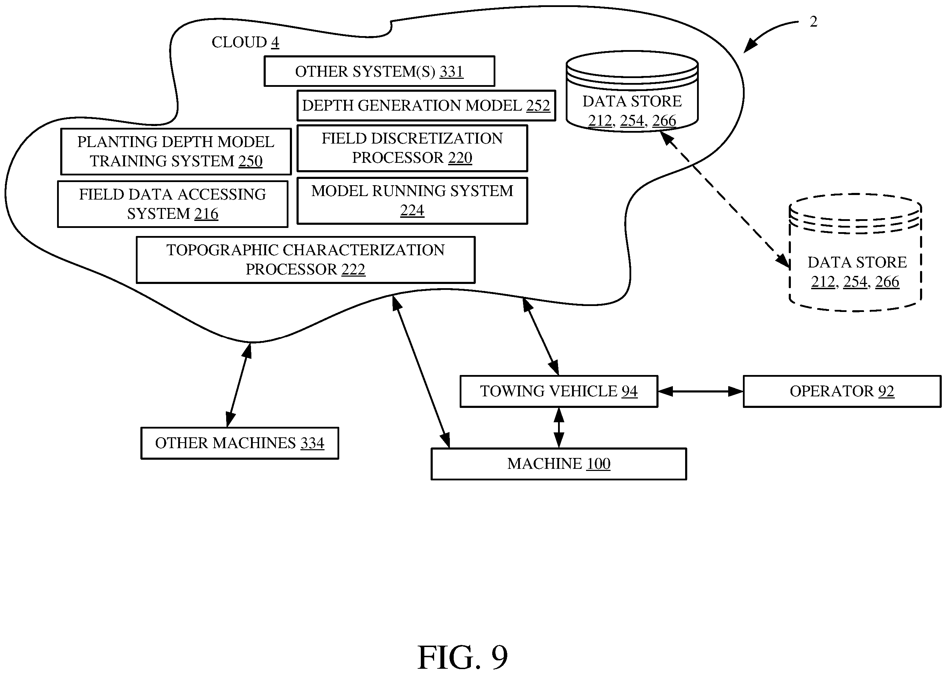

FIG. 9 is a block diagram of one example of the agricultural machine architecture, shown in FIGS. 1-5, where agricultural machine 100 communicates with elements in a remote server architecture 2. In an example, remote server architecture 2 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in FIGS. 1-5 as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 9, some items are similar to those shown in FIGS. 1-5 and they are similarly numbered. FIG. 9 specifically shows that depth generation model 252, planting depth model training system 250, model running system 224, field data accessing system 216, field discretization processor 220, topographic characterization processor 222, data stores 212, 254, 266, and/or systems 331 can be located at a remote server location 4. Therefore, agricultural machine 100 and/or towing vehicle 94 access those systems through remote server location 4.

FIG. 9 also depicts another example of a remote server architecture. FIG. 9 shows that it is also contemplated that some elements of FIGS. 1-5 are disposed at remote server location 4 while others are not. By way of example, data stores 212, 254, 266 can be disposed at a location separate from location 4, and accessed through the remote server at location 4.

Regardless of where the items in FIG. 9 are located, the items can be accessed directly by agricultural machine 100 and/or vehicle 94, and/or other machines 333, through a network (either a wide area network or a local area network, a wifi or Bluetooth network, a cellular network, etc.), the items can be hosted at a remote site by a service, or the items can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the agricultural machine comes close to the fuel truck for fueling, the system automatically collects the information from the machine or transfers information to the machine using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the agricultural machine until the agricultural machine enters a covered location. The agricultural machine, itself, can then send and receive the information to/from the main network.

It will also be noted that the elements of FIGS. 1-5, or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

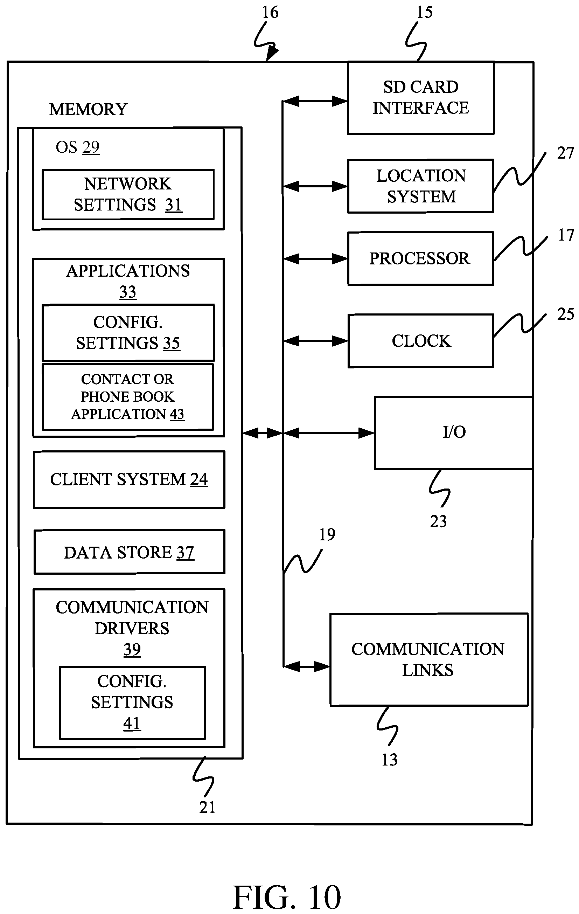

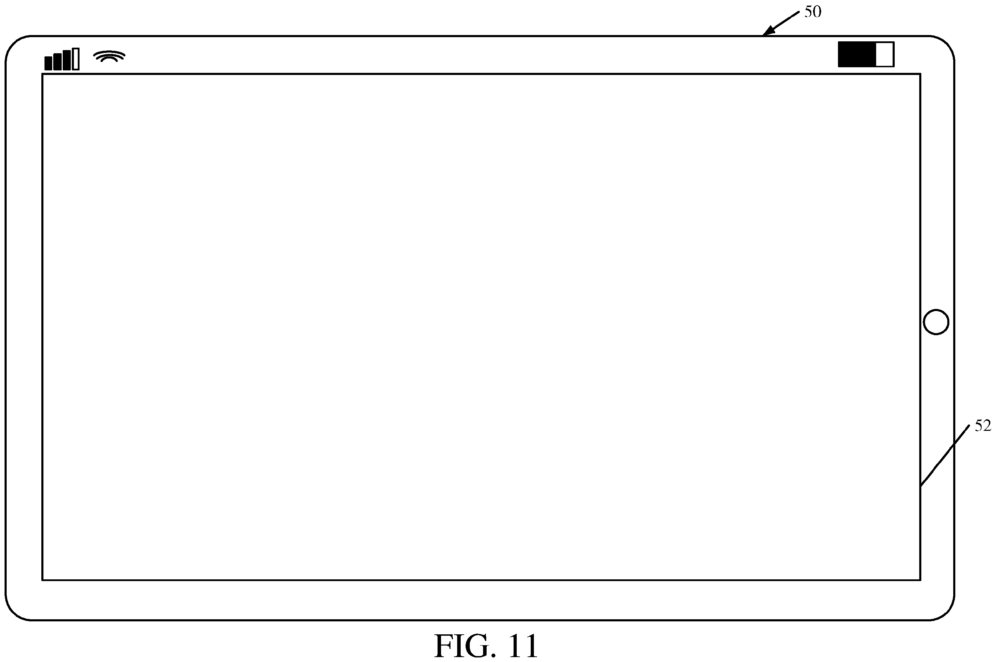

FIG. 10 is a simplified block diagram of one example of a handheld or mobile computing device that can be used as a user's or client's hand held device 16, in which the present system (or parts of it) can be deployed. For instance, a mobile device can be deployed in the operator compartment of towing vehicle 94 or as other system(s) 332. FIGS. 11-12 are examples of handheld or mobile devices.

FIG. 10 provides a general block diagram of the components of a client device 16 that can run some components shown in FIGS. 1-5, that interacts with them, or both. In the device 16, a communications link 13 is provided that allows the handheld device to communicate with other computing devices and in some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various embodiments of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. Clock 25 can also, illustratively, provide timing functions for processor 17.

Location system 27 illustratively includes a component that outputs a current geographical location of device 16. Location system 27 can include, for instance, a global positioning system (GPS) receiver, a dead reckoning system, a cellular triangulation system, or other positioning system. Location system 27 can also include, for example, mapping software or navigation software that generates desired maps, navigation routes and other geographic functions. Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 11 shows one example in which device 16 is a tablet computer 50. In FIG. 11, computer 50 is shown with user interface display screen 52. Screen 52 can be a touch screen or a penenabled interface that receives inputs from a pen or stylus. Computer 50 can also use an onscreen virtual keyboard. Of course, computer 50 might also be attached to a keyboard or other user input device through a suitable attachment mechanism, such as a wireless link or USB port, for instance. Computer 50 can also illustratively receive voice inputs as well.

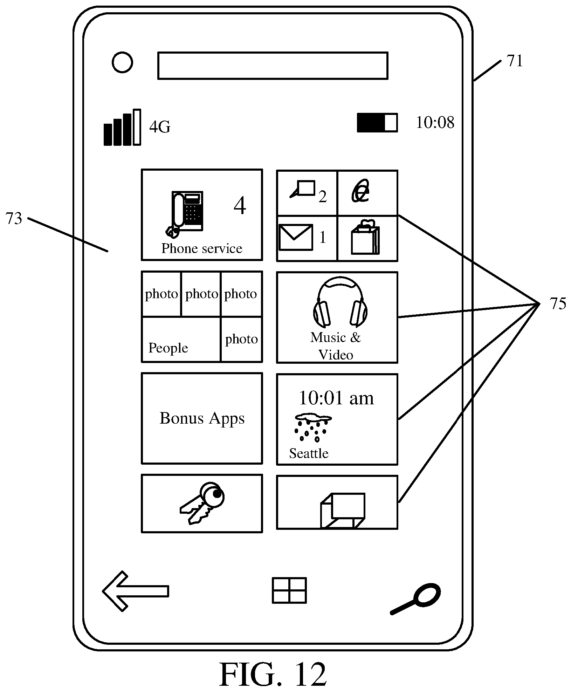

FIG. 12 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

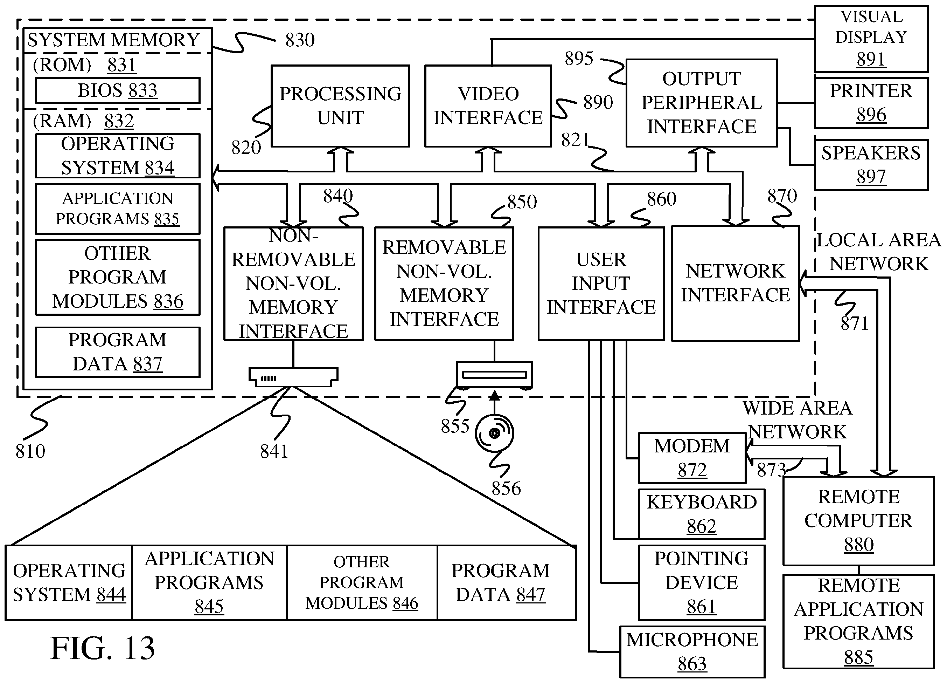

FIG. 13 is one example of a computing environment in which elements of FIGS. 1-5, or parts of them, (for example) can be deployed. With reference to FIG. 14, an example system for implementing some embodiments includes a computing device in the form of a computer 810 programmed to operate as discussed above. Components of computer 810 may include, but are not limited to, a processing unit 820 (which can comprise processors or servers shown in previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 13.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile discs (DVD) or other optical disc storage, magnetic cassettes, magnetic tape, magnetic disc storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 13 illustrates operating system 834, application programs 835, other program modules 836, and program data 837.

The computer 810 may also include other removable/non-removable volatile/nonvolatile computer storage media. By way of example only, FIG. 13 illustrates a hard disc drive 841 that reads from or writes to non-removable, nonvolatile magnetic media, an optical disc drive 855, and nonvolatile optical disc 856. The hard disc drive 841 is typically connected to the system bus 821 through a non-removable memory interface such as interface 840, and optical disc drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 13, provide storage of computer readable instructions, data structures, program modules and other data for the computer 810. In FIG. 13, for example, hard disc drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a local area network - LAN, or wide area network WAN, a controller area network CAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 13 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method of controlling a planting machine (100) having a furrow opener (120) and a gauge wheel (122), comprising:
receiving a set of georeferenced target planting depth values (204) corresponding to a field;
detecting a location of the planting machine (100) in the field;
automatically identifying a target planting depth value from the set of georeferenced
target planting depth values (204), based on the detected location; and automatically generating a control signal to control a planting depth actuator (202) to
adjust a relationship between the furrow opener (120) and the gauge wheel (122) to control planting depth of the planting machine (100) based on the identified target planting depth value.

2. The method of claim 1 and further comprising:
accessing historic planting depth data (270), historic yield data (276), and topography data (268) corresponding to the historic planting depth data (270) and the historic yield data (267); and
training a depth generation model (252) based on the historic planting depth data (270), the historic yield data (267), and the corresponding topography data (268).

3. The method of claim 2 wherein receiving a set of georeferenced target planting depth values (204) comprises:
obtaining topographic data (294) corresponding to a field to be planted;
running the depth generation model (252) based on the topographic data (294) corresponding to the field; and
receiving the set of georeferenced target planting depth values (204) from the depth generation model (252).

4. The method of claim 3 wherein obtaining topographic data (294) corresponding to the field to be planted comprises:
dividing the field into discrete sections;
identifying the topographic information corresponding to each discrete section; and
generating a set of topographic zones corresponding to the field based on the topographic information corresponding to each discrete section.

5. The method of claim 4 wherein generating a set of topographic zones comprises:
generating characterized field data by assigning, to each topographic zone, a topographic characteristic indicator indicative of a topography of the topographic zone, wherein the topographic characteristic indicator comprises, a concave indicator, a convex indicator, or a flat indicator indicating whether the topographic zone has a topography that is concave, convex, or flat.

6. The method of claim 5 wherein running the depth generation model (252) comprises:
providing the characterized field data to the depth generation model (252); and
running the depth generation model (252) based on the characterized field data.

7. The method of claim 5 or 6, wherein generating characterized field data comprises:
accessing georeferenced soil data (272) for the field; and
assigning a soil data identifier to each topographic zone based on the georeferenced soil data (272).

8. The method of one of the claims 5 to 7, wherein generating characterized field data comprises:
accessing environmental data corresponding to the field; and
generating the characterized field data based on the environmental data corresponding to the field.

9. The method of one of the claims 1 to 8, wherein automatically generating a control signal to control a planting depth actuator (202) to control a planting depth of the planting machine (100) based on the identified target planting depth value, comprises:
identifying a current planting depth;
comparing the current planting depth to the target planting depth value to obtain a comparison result;
generating a depth adjustment value based on the comparison result; and
generating the control signal based on the depth adjustment value.

10. The method of claim 9 wherein identifying a current planting depth comprises:
sensing the current planting depth with a furrow sensor (123) or
sensing a characteristic of the planting depth actuator (202); and
estimating the current planting depth based on sensed characteristic of the planting depth actuator (202).

11. The method of one of the claims 1 to 10, wherein the planting machine (100) comprises a plurality of row units (106) with a planting depth actuator (202) on each row unit (106) to control a planting depth of each row unit (106) and wherein automatically generating a control signal to control a planting depth actuator (202) to control a planting depth of the planting machine (100) based on the identified target planting depth value comprises:
automatically generating a plurality of control signals to individually control the planting depth actuators (202) on each row unit (106).

12. A planting depth control system (200), comprising:
a model running system (224) configured to run a depth generation model (252) to obtain a set of georeferenced target planting depth values (204);
a location sensor (218) configured to detect a location of the planting machine (100);
a processor configured to automatically identify a target planting depth value from the set of georeferenced target planting depth values (204), based on the detected location; and
a control signal generator (230) configured to automatically generate a control signal to control a planting depth actuator (202) to control a planting depth of the planting machine (100) based on the identified target planting depth value.

13. The planting depth control system (200) of claim 12 and further comprising:
a data extraction system (258) configured to access historic planting depth data (270), historic yield data (267), and topography data (268) corresponding to the historic planting depth data (270) and the historic yield data (267); and
a model training processor (260) configured to train a depth generation model (252) based on the historic planting depth data (270), the historic yield data (267), and the corresponding topography data (268).

14. The planting depth control system (200) of claim 12 or 13 and further comprising:
a field data accessing system (216) configured to obtain topographic data (294) corresponding to a field to be planted, the model running system (224) being configured to run the depth generation model (252) based on the topographic data (294) corresponding to the field to generate the set of georeferenced target planting depth values (204).

15. The planting depth control system (200) of one of the claims 12 to 14 and further comprising:
a field discretization processor (220) configured to divide the field into discrete sections and identify the topographic information corresponding to each discrete section; and
a topographic characterization processor (222) configured to generate a set of topographic zones corresponding to the field based on the topographic information corresponding to each discrete section, wherein the topographic characterization processor (222) is further configured to generate characterized field data by assigning, to each topographic zone, a topographic characteristic indicator indicative of a topography of the topographic zone.
